# EUROPÄISCHE PATENTSCHRIFT

(11) **EP 0 771 405 B1**
(45) Veröffentlichungstag und Bekanntmachung des Hinweises auf die Patenterteilung: **27.01.1999**
(21) Anmeldenummer: 95943549.6
(22) Anmeldetag: 10.07.1995
(51) Int. Cl.: G01B 3/46, G01B 5/12, G01B 7/13, G01B 5/252

(54) **TASTKOPF FÜR INNENMESSGERÄTE**
SENSOR HEAD FOR INTERNAL MEASURING INSTRUMENTS
PALPEUR POUR APPAREILS DE MESURES INTERIEURES

(30) Priorität: 15.07.1994 DE 4425150
(43) Veröffentlichungstag der Anmeldung: 07.05.1997
(73) Patentinhaber: Hacmann, Hartmut, 64807 Dieburg (DE)
(72) Erfinder: Hacmann, Hartmut, 64807 Dieburg (DE)
(74) Vertreter: Katscher, Helmut, Dipl.-Ing.
(86) Internationale Anmeldenummer: EP9502667
(87) Internationale Veröffentlichungsnummer: WO9602805

(56) Entgegenhaltungen:
- EP-A- 0 105 979
- DE-A- 4 116 815
- DE-U- 9 106 216

## Beschreibung

Die Erfindung betrifft einen Tastkopf für Innenmeßgeräte mit drei am Umfang des Tastkopfes unter 120° zueinander verteilt angeordneten, radial beweglichen, jeweils am Ende eines Spreizarmes angebrachten Tastsegmenten, die an ihren Außenseiten Tastkörper tragen und sich nach innen jeweils an einer axial verschiebbaren Triebnadel abstützen, die aus einer Tastkopfnabe axial herausgeführt ist, wobei jedem Tastsegment ein gesonderter Spreizarm zugeordnet ist, der an der Tastkopfnabe federnd angelenkt ist.

Derartige, nach dem Spreizsystem arbeitende Tastköpfe werden in unterschiedlichen Ausführungsformen und Abmessungen für Innenmeßgeräte, insbesondere für Bohrungsmeßgeräte verwendet. Bei sachgemäßer Anwendung erfaßt der Tastkopf den Bohrungsdurchmesser an jeweils einer Stelle. Die sich dabei einstellende Spreizung der Tastsegmente wird über die Tastkopfschneiden und die mit einer Kegelspitze versehene Triebnadel in eine bestimmte axiale Positionierung der Triebnadel umgesetzt. Ein mit der Tastkopfnabe verbundenes Längenmeßgerät, vorzugsweise eine Meßuhr, erfaßt die axiale Verlagerung der Triebnadel und liefert eine dem angetasteten Bohrungsdurchmesser entsprechende Anzeige oder ein Meßsignal.

Wenn ein bekannter, mit zwei spreizbaren Tastsegmenten und zwei Tastkörpern versehener Tastkopf (DE-A-41 16 815) in der Bohrung gedreht wird, kann zwar der Bohrungsdurchmesser in unterschiedlichen Richtungen bestimmt werden; die Unrundheit der Bohrung kann jedoch nicht geprüft werden; die Ovalität kann aber geprüft werden. Beispielsweise können mit solchen Tastköpfen Bohrungen und Gleichweite nicht voneinander unterschieden werden. Zum Erfassen der Unrundheit von Bohrungen und zum Vermessen von Polygonen, beispielsweise Gleichweiten, ist es erforderlich, eine Drei-Punkt-Messung durchzuführen. Hierzu müssen drei Tastkörper am Umfang vorgesehen sein, üblicherweise unter einem Umfangswinkel von 120°.

Ein bekannter Tastkopf weist zwei Tastsegmente auf, wobei das eine Tastsegment einen Tastkörper und das andere Tastsegment zwei Tastkörper trägt. Die sich dadurch ergebenden drei Meßpunkte liegen jedoch nur bei einer einzigen Spreizstellung der Tastsegmente genau in einem Winkel von 120° zueinander. Durch die für die Messung notwendige Spreizbewegung verschiebt sich die gegenseitige Winkellage der Meßpunkte auf Werte von unter oder über 120°. Somit ist keine lineare Abtastung möglich; bei den mit diesen Tastköpfen ausgestatteten Meßgeräten handelt es sich somit streng genommen nicht um Drei-Punkte-Meßgeräte. Hierfür müssen Tastnadeln verwendet werden, die hinsichtlich ihres Kegelwinkels gegenüber den Tastnadeln für Durchmesser-Meßgeräte (Zwei-Punkt-Messung) modifiziert sind. Dies macht eine erhöhte Lagerhaltung und strenge Unterscheidung von Tastnadeln für beide Arten von Tastköpfen erforderlich.

Bei einem bekannten Tastkopf der eingangs genannten Gattung (DE-U1-91 06 216) sind zwar drei gesonderte, jeweils federnd mit der Tastkopfnabe verbundene Spreizarme vorhanden, die jeweils ein Tastsegment tragen. Die federnde Verbindung jedes Spreizarms mit der Tastkopfnabe erfolgt jedoch über eine Einschnürung der an dieser Stelle rotationssymmetrisch ausgeführten Übergangsstelle zwischen der Tastkopfnabe und den Spreizarmen. Diese Einschnürung bildet eine verhältnismäßig steife Feder, die sich nicht wie ein elastisches Federblatt gemäß dem Stand der Technik nach der DE-A-41 16 815 verhält. Zum Spreizen der Spreizarme sind daher verhältnismäßig hohe Kräfte erforderlich.

Aufgabe der Erfindung ist es daher, einen für eine echte Drei-Punkt-Messung geeigneten Tastkopf der eingangs genannten Gattung so auszuführen, daß die federnden Verbindungen der Spreizarme mit der Tastkopfnabe sehr elastisch sind und in fertigungstechisch einfacher Weise hergestellt werden können.

Diese Aufgabe wird erfindungsgemäß dadurch gelöst, daß jeder Spreizarm über ein gesondertes Federblatt an der Tastkopfnabe federnd angelenkt ist und daß die drei Federblätter jeweils in einem Winkel von 60° zueinander verlaufen und auf der Innenseite von drei sich quer zur Tastkopfachse erstreckenden, außermittigen Bohrungen begrenzt werden, deren Bohrungsachsen jeweils in Winkeln von 60° zueinander verlaufen.

Die Ausbildung der Verbindungsstellen der Spreizarme mit der Tastkopfnabe als Federblätter und deren Gestaltung ermöglicht eine einfache und genaue Herstellung insbesondere der an sich schwer zugänglichen Innenseite der Federblätter. Hierzu ist es nur erforderlich, nacheinander drei quer zur Tastkopflängsachse verlaufende und gegenüber dieser seitlich versetzte Bohrungen auszuführen, wobei der Tastkopf zwischen den einzelnen Bohrungen um jeweils 60° um seine Längsachse gedreht wird.

Da alle drei Tastsegmente genau radial und somit in gleicher Weise wie bei einem Zwei-Punkt-Tastkopf bewegt werden, können Triebnadeln mit gleichen Kegelspitzen wie bei Zwei-Punkt-Tastköpfen verwendet werden. Die Bereitstellung von gesonderten Triebnadeln ist somit nicht erforderlich.

Nachfolgend wird ein Ausführungsbeispiel der Erfindung näher erläutert, das in der Zeichnung dargestellt ist.

Es zeigt:
Fig. 1 einen Tastkopf für ein Innenmeßgerät für die Drei-Punkt-Messung im Längsschnitt,
Fig. 2 einen Schnitt längs der Linie II-II in Fig. 1 und
Fig. 3 einen Schnitt längs der Linie III-III in Fig. 1.

Der in der Zeichnung dargestellte Tastkopf 1 weist eine im wesentlichen hohlzylindrische Tastkopfnabe 2 auf, durch die sich eine axial verschiebbare Triebnadel 3 erstreckt. Am oberen Ende der Tastkopfnabe 2 kann eine (nicht dargestellte) Meßuhr befestigt werden, deren Meßuhrtaster 4 die Triebnadel 3 stirnseitig antastet, um deren axiale Verschiebung zu erfassen.

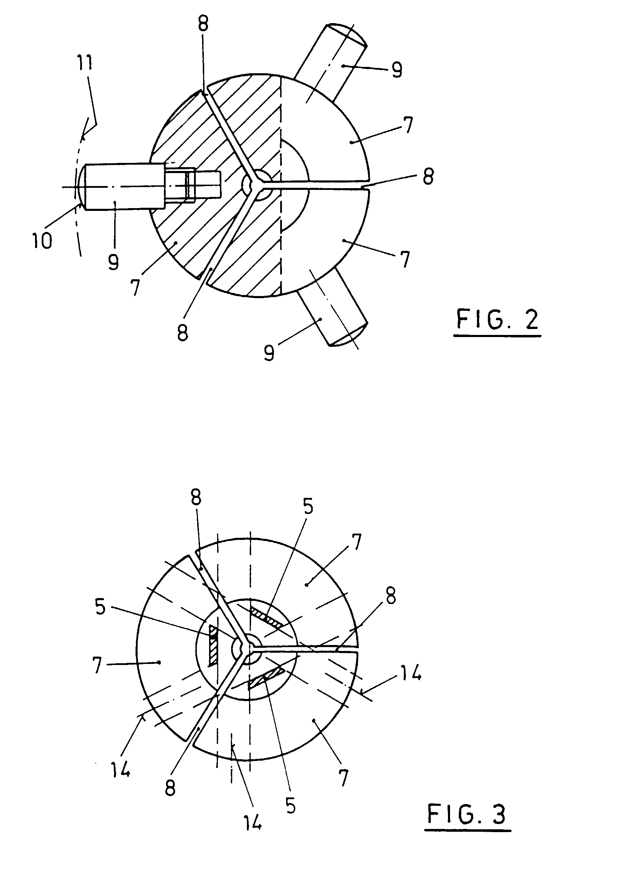

Über drei jeweils im Winkel von 60° zueinander angeordnete Federblätter 5 (Fig. 3) sind drei Spreizarme 6 spreizbar mit der Tastkopfnabe 2 verbunden. Jeder der drei Spreizarme 6 trägt an seinem unteren, freien Ende ein Tastsegment 7, das sich jeweils über einen Umfangswinkel von 120° erstreckt und durch einen Radialschlitz 8 vom benachbarten Tastsegment 7 getrennt ist. Die Radialschlitze 8 erstrecken sich in axialer Richtung über die Federblätter 5 hinaus bis zum Anfang der Tastkopfnabe 2, so daß auch die Spreizarme 6 durch die Radialschlitze 8 voneinander getrennt sind.

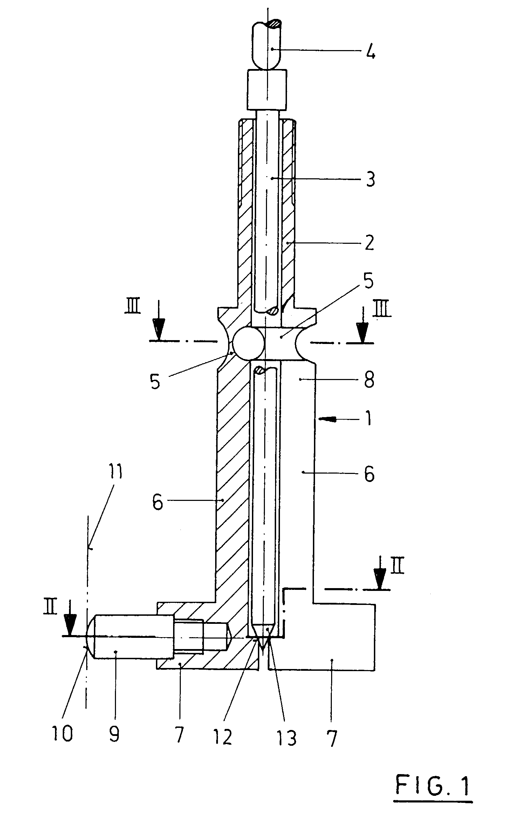

Jedes Tastsegment 7 trägt einen sich radial erstreckenden Tastkörper 9, dessen äußere, gewölbte Tastfläche 10 zum Antasten der Bohrungswand 11 dient, wie in Fig. 1 mit strichpunktierten Linien angedeutet ist.

An seiner Innenseite stützt sich jedes Tastsegment 7 über eine Tastkopf schneide 12 an einer Kegelspitze 13 der Triebnadel 3 ab.

Wenn die Triebnadel 3 axial im Tastkopf 1 bewegt wird, drückt sie bei ihrer Abwärtsbewegung mit ihrer Kegelspitze 13 die Tastsegmente 7 radial auf einen größeren Durchmesser. Werden die Tastsegmente 7 durch die Berührung der Tastkörper 9 mit der Bohrungswand 11 radial nach innen gedrückt, so verschiebt sich die Triebnadel 3 in umgekehrter Richtung nach oben. Diese Bewegung wird durch die aufgesetzte Meßuhr angezeigt. So wird eine radiale Verlagerung der Tastsegmente 7 unmittelbar und linear über die Triebnadel 3 auf die Meßuhr übertragen.

Wie man aus Fig. 3 erkennt, werden die drei Federblätter 5 auf ihrer Innenseite von drei Bohrungen 14 begrenzt, die in der Zeichnung jeweils mit ihren Bohrungsmittellinien angedeutet sind. Man erkennt, daß die drei Bohrungen 14 außermittig, d.h. gegenüber der Tastkopf achse versetzt verlaufen. Sie erstrecken sich quer zur Tastkopfachse, und ihre Bohrungsachsen verlaufen jeweils in Winkeln von 60° zueinander.

Da sich die Bohrungen 14 im Bereich der Tastkopf achse miteinander und mit der Längsbohrung des Tastkopfes 1 überschneiden, verbleibt in diesem Bereich nur das die Federblätter 5 bildende Material, wobei auch an deren Außenseite eine entsprechende spanende Materialabnahme erfolgt.

## Patentansprüche

1. Tastkopf für Innenmeßgeräte mit drei am Umfang des Tastkopfes (1) unter 120° zueinander verteilt angeordneten, radial beweglichen, jeweils am Ende eines Spreizarmes (6) angebrachten Tastsegmenten (7), die an ihren Außenseiten Tastkörper (9) tragen und sich nach innen jeweils an einer axial verschiebbaren Triebnadel (3) abstützen, die aus einer Tastkopfnabe (2) axial herausgeführt ist, wobei jedem Tastsegment (7) ein gesonderter Spreizarm (6) zugeordnet ist, der an der Tastkopfnabe (2) federnd angelenkt ist, dadurch gekennzeichnet, daß jeder Spreizarm (6) über ein gesondertes Federblatt (5) an der Tastkopfnabe (2) federnd angelenkt ist, daß die drei Federblätter (5) jeweils in einem Winkel von 60° zueinander verlaufen und auf ihrer Innenseite von drei sich quer zur Tastkopfachse erstreckenden, außermittigen Bohrungen (14) begrenzt werden, deren Bohrungsachsen jeweils in Winkeln von 60° zueinander verlaufen, und daß die Triebnadel (3) eine Kelgelspitze (13) aufweist, worauf die radial beweglichen Tastsegmente (7) über eine Tastkopfschneide (12) abstützen.

## Claims

1. Probe for internal measuring instruments having three radially mobile probe segments (7), fitted in each case to the end of an expanding arm (6) and located around the circumference of the probe (1), said segments being distributed at an angle of 120° in relation to each other and supporting touch-bodies (9) on their external faces and being supported towards the inside by an axially adjustable drive needle (3), which is brought out axially from a probe hub (2) and a separate expanding arm (6) is allocated to each probe segment (7), said separate expanding arm being spring-hinged to the probe hub (2), characterised in that each expanding arm (6) is spring-hinged to the probe hub (2) by a separate spring leaf(5), that the three spring leaves (5) each run at an angle of 60° to each other, and are bounded on their inside by three eccentric holes (14) which extend crossways in relation to the probe axis, the axes of said holes running in each case at angles of 60° to each other, and that the drive needle (3) has a cone point (13) on which the radially mobile probe segments (7) are supported by means of a probe edge (12).

## Revendications

1. Palpeur pour appareils de mesures intérieures comportant trois segments palpeurs (7) répartis à 120° l'un de l'autre sur la périphérie du palpeur (1), mobiles radialement et respectivement agencés à l'extrémité d'un bras extensible (6), lesdits segments palpeurs portant des corps palpeurs (9) sur leurs face externe et s'appuyant vers l'intérieur, respectivement, sur une broche motrice (3) déplaçable axialement qui ressort axialement d'un moyeu de palpeur (2), un bras extensible séparé (6), qui est articulé de manière élastique sur le moyeu de palpeur (2), étant affecté à chaque segment palpeur (7), caractérisé en ce que chaque bras extensible (6) est articulé de manière élastique sur le moyeu de palpeur (2) via un ressort à lame séparé (5), en ce que les trois ressorts à lame (5) font respectivement un angle de 60° l'un par rapport à l'autre et sont délimités, sur leur côté externe, par trois alésages excentriques (14) s'étendant transversalement à l'axe du palpeur, dont les axes font respectivement des angles mutuels de 60°, et en ce que la broche motrice (3) présente une pointe conique (13) sur laquelle s'appuient les segments palpeurs (7) déplaçables radialement via une arête (12) du palpeur.
